# EUROPEAN PATENT SPECIFICATION

(11) **EP 3 375 765 B1**
(45) Date of publication and mention of the grant of the patent: **21.08.2019**
(21) Application number: 18162229.1
(22) Date of filing: 16.03.2018
(51) Int. Cl.: C04B 28/12, C09D 1/10

(54) **SPRAYABLE EXTERNAL THERMAL INSULATION SYSTEM FOR BUILDINGS**
SPRITZBARES WÄRMEDÄMMSYSTEM FÜR GEBÄUDE
SYSTÈME D'ISOLATION THERMIQUE EXTERNE PULVÉRISABLE POUR BÂTIMENTS

(30) Priority: 17.03.2017 IT 201700030069
(43) Date of publication of application: 19.09.2018
(73) Proprietor: Genial Materials S.R.L., 60044 Fabriano (AN) (IT)
(72) Inventor: MINGARELLI, Diego, 60044 FABRIANO (AN) (IT)
(74) Representative: Cutropia, Gianluigi

(56) References cited:
- CH-A2- 709 866
- SALA ELISA ET AL: "Lightweight natural lime composites for rehabilitation of Historical Heritage", CONSTRUCTION AND BUILDING MATERIALS, ELSEVIER, NETHERLANDS, vol. 125, 13 August 2016 (2016-08-13), pages 81-93, XP029751149, ISSN: 0950-0618, DOI: 10.1016/J.CONBUILDMAT.2016.08.033
- CARBONARO CORRADO ET AL: "An integrated design approach to the development of a vegetal-based thermal plaster for the energy retrofit of buildings", ENERGY AND BUILDINGS, LAUSANNE, CH, vol. 124, 21 April 2016 (2016-04-21), pages 46-59, XP029559048, ISSN: 0378-7788, DOI: 10.1016/J.ENBUILD.2016.03.063

## Description

The present patent application for industrial invention relates to a sprayable external thermal insulation system for buildings.

The external thermal insulation system is used on the façades of buildings with thin plaster. The external thermal insulation system is used for the thermal (and in some cases also sound) insulation of walls in new or existing buildings.

Sprayable thermal insulation systems are known on the market, which are obtained by spraying a sprayable material on the wall of the building to form the thermal insulation system. Generally, the sprayable material contains a large amount of expanded silicon (for instance empty glass spheres) to give porosity to the thermal insulation system in order to embed as much as air possible, considering that air is an excellent insulation material by itself. Expanded silicon is bound by means of a binder, such as cement or hydrated lime. Sala, E. et al are disclosing in "Lightweight natural lime composites for rehabilitation of Historical Heritage" in Construction and Building Materials, 125, pages 81-93 (2016) several natural lime composites comprising NHL 3.5, sand and one type of lightweight aggregate such as cork, expanded perlite, expanded glass etc.. Carbonaro, C. et al are disclosing in "An integrated design approach to the development of a vegetal-based thermal plaster for the energy retrofit of buildings" in Energy and Building, 124, pages 46-59 (2016) thermal plasters comprising NHL, granulated corncob, cork, expanded perlite and zeolites. CH709866A2 discloses a mortar mixture useful e.g. for thermal insulation and/or fire protection of finish coat, and as grout for mold for building, comprises glazed and closed cell spheres made of expanded silica sand and/or expanded perlite, and hydraulic lime as binder.

However these sprayable thermal insulation systems of the prior art are impaired by some drawbacks. In fact, during the spraying and the propping-up of the thermal insulation system, the expanded silicon is broken and destroyed, no longer guaranteeing the thermal performance that is typical of expanded silicon.

The purpose of the present invention is to eliminate the drawbacks of the prior art by disclosing a sprayable thermal insulation system with excellent thermal insulation, sound insulation and transpiration properties.

Another purpose of the present invention is to provide such a sprayable external thermal insulation system that is also fire-resistant.

Another purpose is to provide such a sprayable external insulation system that is lightweight and at the same time bending-resistant.

These purposes are achieved according to the invention with the characteristics of the independent claim 1.

The external thermal insulation systems of the prior art generally comprise base materials, such as perlite, expanded amorphous silica and hydraulic lime. However, the inventor discovered that such external thermal insulation systems of the prior art have a lower insulation power and a poor mechanical resistance.

In order to solve such inconvenience, the inventor performed a series of experimental tests, adding materials with low thermal conductivity and high mechanical resistance to said base materials.

After performing several experimental tests on different types of additional materials, the inventor discovered that the best results are obtained using cork in granules, pumice and natural fibers as additional materials.

In fact, cork is a natural material with high insulation power and thermal conductivity of approximately 0.040-0.045 W/mk. Therefore, with the use of cork, the external thermal insulation system has a thermal insulation performance with thermal conductivity of λ = 0.037 W/mk. Moreover, cork has high stability and water impermeability.

Pumice is a natural mineral. Pumice is an expanded silicate of volcanic origin, formed of silica and aluminum oxide. Compared to other raw materials, such as clay or vermiculite, pumice has a porous microstructure, a low specific weight, a low thermal conductivity and a high mechanical resistance.

Natural fibers give a high mechanical resistance to the external thermal insulation system.

The sprayable external insulation system for buildings according to the present invention comprises the following materials: Cork in granules, Natural Hydraulic Lime, Expanded Amorphous Silica, Pumice, micronized Perlite, Natural Fibers, advantageously from recycling, and Additives.

After several experimental tests, the inventor devised the quantities (in weight percentage) of the various materials, as shown in Table 1 below:

**Table 1**

| MATERIAL | WEIGHT % |
|---|---|
| Cork | 27-33% |
| Natural Hydraulic Lime | 30-35% |
| Expanded Amorphous Silica | 12-16% |
| Perlite | 8-12% |
| Pumice | 10-14% |
| Natural Fibers | 1-2% |
| Additives | 0.5-1% |

Advantageous embodiments of the invention will appear from the dependent claims.

Additional features of the invention will appear manifest from the detailed description below, which refers to merely a illustrative, not limiting embodiment.

Cork is broken up with a machine that cuts and sieves the cork granules, using a sieve provided with 3 mm diameter holes. In such a way, the cork particles have a maximum dimension of 3mm. Simultaneously, cork is extracted by means of an extractor. The extraction power can be adjusted according to the specific weight of the cork particles to be extracted. In view of the above, the cork particles can be selected according to the size and to the specific weight, in order to use the most elastic cork particles, which have no bark, and with an alveolar porous microstructure.

Pumice is cut up in a size comprised between 1 mm and 2 mm.

Perlite is a micronized expanded material in powder form, with is generally used as a lightweight aggregate to obtain thermal insulation materials. Thanks to the provision of perlite, the rheology of plaster can be changed, with advantageous effects on workability during the layout of the external thermal insulation system.

Expanded amorphous silica is an expanded silicate pearl of completely inorganic origin, inert and lightweight. The expanded amorphous silica has fire-resistant properties and high chemical-physical inertia. Therefore, the expanded amorphous silica can be used with any type of bonding material.

Moreover, pumice, perlite and expanded amorphous silica are highly porous materials. Therefore, the use of said materials gives a high thermal insulation capability to the external thermal insulation system. In fact, a highly porous material permits to embed high quantities of air, and air is an excellent thermal insulation material.

The natural hydraulic lime was chosen as main binder and comprises the following materials expressed in weight percentage, as shown in Table 2 below.

**Table 2**

| MATERIAL | WEIGHT % |
|---|---|
| Calcium oxide (CaO) | 50-70% |
| Insoluble silicon dioxide | 4-7% |
| Combined silicon dioxide (SiO₂) | 12-17% |
| Calcium hydroxide (Ca(OH)₂) | 18-26% |

The natural hydraulic lime is produced by using selected silicate limestone. Limestone is baked in vertical ovens with temperature lower than 1250°C and converted into powder, by merely slaking the calcium oxide, without the need for grinding. Such natural hydraulic lime is totally free of pozzolanic materials, blast furnace waste, flying ashes or hydraulic binders of any type (clinker, cement, etc.), and complies with Standard UNI EN 459-1.

The use of Natural Hydraulic Lime as the only binder for producing the sprayable external thermal insulation system ensures biocompatibility, fully respecting the man and the environment. The total absence of salts, chemical products, volatile organic compounds and the completely mineral nature of components ensure purity, non-toxicity, non-harmfulness and total recycling. The main characteristics of the natural hydraulic lime, such as the slow hardening time, the continuous increment of mechanical resistance over time and the low elastic modulus, give elasticity to the external thermal insulation system, unlike the other systems that are operated with products based on non-natural lime or cement.

The porosity of natural hydraulic lime ensures a high diffusion of aqueous vapor, gives transpiration to the external thermal insulation system, permits the disposal of the absorbed water and adjusts the environmental humidity, avoiding the formation of harmful condensation and mold. The high basicity (pH is 12.5) of the natural hydraulic lime mixture protects the surface of the external thermal insulation system against biodeteriogenous agents and avoids their proliferation, creating hostile conditions for the survival of pathogen microorganisms (bacteria, fungi, viruses) that can cause infections, diseases and allergic reactions.

For producing the external thermal insulation system according to the present invention, natural hydraulic lime is chosen as binder because it is natural, resistant, durable and has a strong antibacterial action.

In brief, the characteristics of the sprayable external thermal insulation according to the present invention are:
- Fire-resistance in Euroclass A1;
- Cold insulation with very low thermal conductivity (λ = 0.037 W/mK);
- Warm insulation with thermal diffusivity value (α) 10 times higher than traditional thermal insulation panels of expanded polystyrene (EPS) or in extruded polystyrene (XPS);
- Porosity with total percentage of 71%;
- Extremely lightweight, with density of 250 kg/m³;
- Excellent mechanical and bending resistance;
- Transpiration with vapor permeability coefficient µ = 3.

The sprayable thermal insulation system according to the invention can be used both indoor and outdoor in buildings. The application fields are: new buildings, old buildings (restoration works), indoor/outdoor spaces.

## Claims

1. Sprayable external thermal insulation system for buildings comprising the following materials expressed in weight percentage as in Table 1 below:
**Table 1**
| MATERIAL | WEIGHT % |
|---|---|
| Cork | 27-33% |
| Natural hydraulic lime | 30-35% |
| Expanded amorphous silica | 12-16% |
| Perlite | 8-12% |
| Pumice | 10-14% |
| Natural fibers | 1-2% |
| Additives | 0,5-1% |

2. The external thermal insulation system of claim 1, wherein said natural hydraulic lime comprises the following materials expressed in weight percentage as in Table 2 below:
**Table 2**
| MATERIAL | WEIGHT % |
|---|---|
| Calcium oxide (CaO) | 50-70% |
| Insoluble silicon dioxide (SiO₂) | 4-7% |
| Combined silicon dioxide (SiO₂) | 12-17% |
| Calcium hydroxide (Ca(OH)₂) | 18-26% |

3. The external thermal insulation system of claim 1 or 2, wherein cork is in particles with maximum size of 3mm; pumice is in granules with size between 1mm and 2mm; and perlite is micronized expanded perlite in powder.

## Patentansprüche

1. Sprühbares Wärmedämmsystem für Gebäude, umfassend folgende Materialien, ausgedrückt in Gewichtsprozent gemäß nachstehender Tabelle 1:
**Tabelle 1**
| MATERIAL | GEW.-% |
|---|---|
| Kork | 27-33 % |
| Natürlicher hydraulischer Kalk | 30-35 % |
| Amorphes Siliciumdioxid | 12-16 % |
| Perlit | 8-12 % |
| Bimsstein | 10-14 % |
| Naturfasern | 1-2 % |
| Zusatzstoffe | 0,5-1 % |

2. Wärmedämmsystem nach Anspruch 1, wobei der natürliche hydraulische Kalk folgende Materialien umfasst, ausgedrückt in Gewichtsprozent gemäß nachstehender Tabelle 2:
**Tabelle 2**
| MATERIAL | GEW.-% |
|---|---|
| Calciumoxid | 50-70 % |
| Unlösliches Siliciumdioxid (SiO₂) | 4-7 % |
| Kombiniertes Siliciumdioxid (SiO₂) | 12-17 % |
| Calciumhydroxid (Ca(OH)₂) | 18-26 % |

3. Wärmedämmsystem nach Anspruch 1 oder 2, wobei Kork in Teilchen mit einer maximalen Größe von 3 mm vorliegt; Bimsstein in Körnchen mit einer Größe zwischen 1 mm und 2 mm vorliegt; und Perlit expandiertes, mikronisiertes Perlit in Pulverform ist.

## Revendications

1. Système d'isolation thermique pulvérisable par l'extérieur pour bâtiments comprenant les matières suivantes, exprimées en pourcentage de poids comme dans le tableau ci-contre :
**Tableau 1**
| MATIÈRE | % POIDS |
|---|---|
| Liège | 27-33% |
| Chaux hydraulique naturelle | 30-35% |
| Silicate amorphe expansé | 12-16% |
| Perlite | 8-12% |
| Pierre ponce | 10-14% |
| Fibres naturelles | 1-2% |
| Additifs | 0,5-1% |

2. Système d'isolation thermique pulvérisable par l'extérieur selon la revendication 1, où ladite chaux hydraulique naturelle comprend les matières suivantes exprimées en pourcentage de poids comme dans le tableau 2 ci-contre :
**Tableau 2**
| MATIÈRE | % PESO |
|---|---|
| Oxyde de calcium (CaO) | 50-70% |
| Dioxyde de silicium (SiO₂) non soluble | 4-7% |
| Dioxyde de silicium (SiO₂) combiné | 12-17% |
| Hydroxyde de calcium (Ca(OH)₂) | 18-26% |

3. Système d'isolation thermique pulvérisable par l'extérieur selon la revendication 1 ou 2, où le liège est en particules ayant des dimensions maximales de 3 mm ; la pierre ponce est en granulés avec granulométrie comprise entre 1 mm et 2mm ; et la perlite est une perlite expansée micronisée en poudre.
